# EUROPEAN PATENT APPLICATION

(11) **EP 4 635 830 A1**
(43) Date of publication of application: **22.10.2025**
(21) Application number: 23902610.7
(22) Date of filing: 08.12.2023
(51) Int. Cl.: B62D 35/00

(54) **AERODYNAMIC KIT CONTROL SYSTEM FOR VEHICLE, AND VEHICLE**

(30) Priority: 16.12.2022 CN 202211627955
(71) Applicant: Wuhan Lotus Cars Co., Ltd., Wuhan, Hubei 430056 (CN)
(72) Inventor: TANG, Huifang, Wuhan, Hubei 430070 (CN); YU, Jianshan, Wuhan, Hubei 430070 (CN); HE, Shichao, Wuhan, Hubei 430070 (CN); WEI, Qunxiong, Wuhan, Hubei 430070 (CN); ZHENG, Duan, Wuhan, Hubei 430070 (CN); XIONG, Zhenfeng, Wuhan, Hubei 430070 (CN); ZHENG, Mingmin, Wuhan, Hubei 430070 (CN)
(74) Representative: Barker Brettell LLP
(86) International application number: PCT/CN2023/137508
(87) International publication number: WO 2024/125414

(57) **Abstract**

An aerodynamic kit control system for a vehicle, and a vehicle are provided, which relate to the technical field of vehicles. The aerodynamic kit control system for a vehicle may include a rear wing system, a grille system, an air dam system, a diffuser system and a control apparatus, where the control apparatus may control the motion of the rear wing system, the grille system, the air dam system and the diffuser system according to real-time operation data of the vehicle, so as to adjust an airflow. Thus, the aerodynamics of a vehicle when the vehicle is in different traveling conditions is resolved, the stability of vehicle control is improved, the traveling resistance of the vehicle is reduced, the fuel consumption/power consumption of the complete vehicle is reduced, and an extreme vehicle-machine interaction experience is also provided for customers.

## Description

### TECHNICAL FIELD

The present invention relates to the technical field of vehicles, in particular to an aerodynamic kit control system for a vehicle, and a vehicle.

### BACKGROUND

In existing vehicles, in order to improve vehicle performance, the quantity of multiple aerodynamic kits installed in a vehicle is gradually increasing, while in the aerodynamic kits of general vehicles, each component corresponds to a separate control apparatus and is controlled separately. In fact, each aerodynamic kit may improve the performance of the vehicle when controlled, but it is impossible for each aerodynamic kit to move to the optimal position under the same conditions, which causes the performance of the vehicle not to be fully optimized.

### SUMMARY

An object of a first aspect of the present invention is to provide an aerodynamic kit control system for a vehicle, to solve a problem in the prior art that a plurality of aerodynamic kits cannot interlinked, resulting in a weak ability to improve the aerodynamic performance of the vehicle.

An object of a second aspect of the present invention is to provide a vehicle including the aerodynamic kit control system for a vehicle as described above.

In particular, the present invention provides an aerodynamic kit control system for a vehicle, including:
a rear wing system, arranged at a rear of the vehicle, and including a first rear wing and a second rear wing, where the first rear wing and the second rear wing are controllably interlinked to change a position relative to a rear of the vehicle, so as to adjust an airflow at the rear of the vehicle;
a grille system, arranged at a front bumper of the vehicle, and including an air intake port and at least one spoiler blade, where each spoiler blade is controllably movable to open or close the air intake port, so as to adjust an airflow into the air intake port;
an air dam system, arranged at a bottom of the vehicle, and including a plurality of first spoilers, where the plurality of first spoilers are distributed on left side, middle side, and right side of the air dam system, and the first spoiler is controllably movable to change its position relative to the bottom of the vehicle, so as to adjust an airflow at the bottom of the vehicle;
a diffuser system, arranged at a rear bumper of the vehicle, and including a second spoiler, where the second spoiler is controllably movable to change its position relative to the rear bumper, so as to adjust an airflow at the rear bumper; and
a control apparatus, configured to control the rear wing system, the grille system, the air dam system, and the diffuser system according to real-time operation data of the vehicle, so as to adjust an airflow.

Optionally, the real-time operation data includes real-time speed data and motion mode data of the vehicle; and
the control apparatus is configured to, when the vehicle is in at least one of conditions in which the vehicle is in a non-motion mode and a real-time speed of the vehicle is less than a first speed value, control each of the rear wing system, the grille system, the air dam system, and the diffuser system to be in a closed state.

Optionally, the real-time operation data includes heat dissipation mode data;
the control apparatus is further configured to, when the vehicle is in a motion mode, has a real-time speed of less than the first speed value, and is in a heat dissipation mode, control part or all of the spoiler blades of the grille system to be opened to a position at a first preset angle.

Optionally, the real-time operation data includes braking mode data; and
the control apparatus is further configured to, when the vehicle is in a motion mode, has a real-time speed of less than the first speed value, and is in a braking mode, control the rear wing system to move until it is opened to a position where an included angle between a mounting surface of the rear of the vehicle and each of the first rear wing and the second rear wing is a second preset angle.

Optionally, the control apparatus is further configured to, when the vehicle is in a motion mode and has a real-time speed of greater than or equal to the first speed value and less than a second speed value, control the first rear wing and the second rear wing of the rear wing system to move to a position where an included angle between each of them and the mounting surface of the rear of the vehicle is a third preset angle, where the second speed value is greater than the first speed value, and the third preset angle is smaller than the second preset angle.

Optionally, the control apparatus is further configured to, when the vehicle is in a motion mode, has a real-time speed of greater than or equal to the first speed value and less than the second speed value, and is in a braking mode, control the first rear wing and the second rear wing of the rear wing system to move to a position where an included angle between each of them and the mounting surface of the rear of the vehicle is the second preset angle, and simultaneously control all of the first spoilers of the air dam system to be opened to a position where an included angle between them and the bottom of the vehicle is a fourth preset angle.

Optionally, the control apparatus is further configured to, when the vehicle is in a motion mode and has a real-time speed of greater than or equal to the second speed value and less than the third speed value, control the first rear wing and the second rear wing of the rear wing system to move to a position where an included angle between each of them and the mounting surface of the rear of the vehicle is a fifth preset angle, and simultaneously control the second spoiler of the diffuser system to move to a position where an included angle between it and the rear bumper is a sixth preset angle;
where the third speed value is greater than the second speed value, the fifth preset angle is smaller than the second preset angle, and the fifth preset angle is greater than the third preset angle.

Optionally, the control apparatus is further configured to, when the vehicle is in a motion mode, has a real-time speed of greater than or equal to the second speed value and less than the third speed value, and is in a braking mode, control the first rear wing and the second rear wing of the rear wing system to move to a position where an included angle between each of them and the mounting surface of the rear of the vehicle is the second preset angle.

Optionally, the control apparatus is further configured to, when the vehicle is in a motion mode and has a real-time speed of greater than the third speed value, control part or all of the spoiler blades of the grille system to be opened to a position at the first preset angle, control the first rear wing and the second rear wing of the rear wing system to move to a position where included angles between them and the rear of the vehicle are the fifth preset angle, control the first spoilers located on left side and right side of the air dam system to be opened to a position where included angles between them and the bottom of the vehicle are the fourth preset angle, and simultaneously control the second spoiler of the diffuser system to be opened to a position where an included angle between it and the rear bumper is the sixth preset angle.

Optionally, the control apparatus is configured to, when the vehicle is in a welcome mode, control the grille system, the air dam system, the rear wing system, and the diffuser system to be sequentially turned on and turned off.

In particular, the present invention further provides a vehicle, which includes the aerodynamic kit control system for a vehicle described above.

The aerodynamic kit control system for a vehicle of the present solution may include a rear wing system, a grille system, an air dam system, a diffuser system, and a control apparatus, where the control apparatus is configured to control movements of the rear wing system, the grille system, the air dam system, and the diffuser system according to real-time operation data of the vehicle, so as to adjust an airflow. Thus, the aerodynamics of a vehicle when the vehicle is in different traveling conditions is resolved, improving the stability of control of the vehicle, reducing the traveling resistance of the vehicle, reducing the fuel consumption/power consumption of the entire vehicle, and also providing an extreme vehicle-machine interaction experience of customers. Since the control apparatus can simultaneously control the rear wing system, the grille system, the air dam system, and the diffuser system, it enables higher stability, lower fuel consumption and better interaction experience of customers compared with individual control of the systems. This in turn ensures optimal heat dissipation performance and aerodynamic performance of the vehicle compared with individual control.

With reference to the detailed description of specific embodiments of the present invention in conjunction with the accompanying drawings, the skilled in the art will gain a clearer understanding of the aforementioned and other objectives, advantages, and features of the present invention.

### BRIEF DESCRIPTION OF DRAWINGS

Hereinafter, specific embodiments of the present invention will be described in detail with reference to the accompanying drawings in an exemplary rather than limited manner. The same reference numerals in the accompanying drawings denote the same or similar components or parts. The skilled in the art should understand that these accompanying drawings may not be drawn to scale. In the accompanying drawings:
FIG. 1 is a schematic block diagram of an aerodynamic kit control system for a vehicle according to a specific embodiment of the present invention; and
FIG. 2 is a schematic block diagram of an aerodynamic kit control system for a vehicle according to another specific embodiment of the present invention.

### DESCRIPTION OF EMBODIMENTS

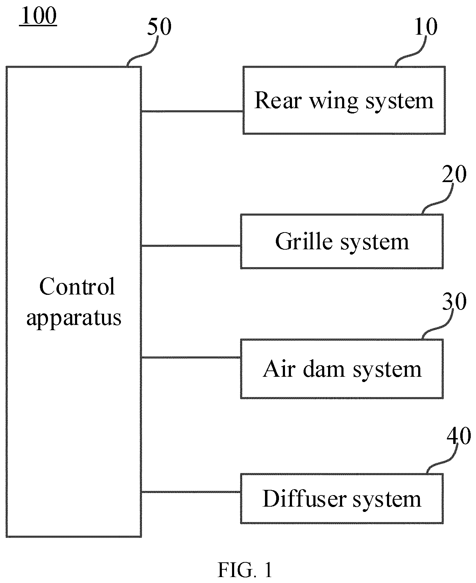

FIG. 1 is a schematic block diagram of an aerodynamic kit control system for a vehicle according to a specific embodiment of the present invention; and as a specific embodiment of the present invention, the present embodiment provides an aerodynamic kit control system for a vehicle. The aerodynamic kit control system 100 for a vehicle of the present embodiment may include a rear wing system 10, a grille system 20, an air dam system 30, a diffuser system 40 and a control apparatus 50. The rear wing system 10 is arranged at a rear of the vehicle, the rear wing system 10 may include a first rear wing 11 and a second rear wing 12, and the first rear wing 11 and the second rear wing 12 are controllably to interlink to change their positions relative to a mounting surface of the rear of the vehicle, so as to adjust an airflow at the rear of the vehicle. The grille system 20 is arranged at a front bumper of the vehicle, the grille system 20 include an air intake port 21 and at least one spoiler blade 22, and each spoiler blade is controllably movable to open or close the air intake port 21, so as to adjust an airflow into the air intake port 21. The air dam system 30 is arranged at a bottom of the vehicle, the air dam system 30 includes a plurality of first spoilers 31, the plurality of first spoilers 31 are distributed on left side, middle side, and right side of the air dam system 30, and the first spoiler 31 is controllably movable to change its position relative to the bottom of the vehicle, so as to adjust an airflow at the bottom of the vehicle. The diffuser system 40 is arranged at a rear bumper of the vehicle, the diffuser system 40 may include a second spoiler 41, and the second spoiler 41 is controllably movable to change its position relative to the rear bumper, so as to adjust an airflow at the rear bumper. The control apparatus 50 is configured to control the rear wing system 10, the grille system 20, the air dam system 30, and the diffuser system 40 according to the real-time operation data of the vehicle, so as to adjust an airflow.

Specifically, the aerodynamic kit control system 100 for a vehicle of the present embodiment may include the rear wing system 10, the grille system 20, the air dam system 30, and the diffuser system 40 and the control apparatus 50, where the control apparatus 50 may control movements of the rear wing system 10, the grille system 20, the air dam system 30, and the diffuser system 40 according to the real-time operation data of the vehicle, so as to adjust an airflow. Thus, the aerodynamics of a vehicle when the vehicle is in different traveling conditions is resolved, the stability of control of vehicle is improved, the traveling resistance of the vehicle is reduced, the fuel consumption/power consumption of the entire vehicle is reduced, and also an extreme vehicle-machine interaction experience is provided for customers. Since the control apparatus 50 of the present embodiment may simultaneously control the rear wing system 10, the grille system 20, the air dam system 30, and the diffuser system 40, the vehicle may have better stability, lower fuel consumption, and better interactive experience with the customers compared with the individual control of each system. Furthermore, it may be ensured that the heat dissipation performance of the vehicle is optimal compared with the individual control, and the aerodynamic performance is also optimal.

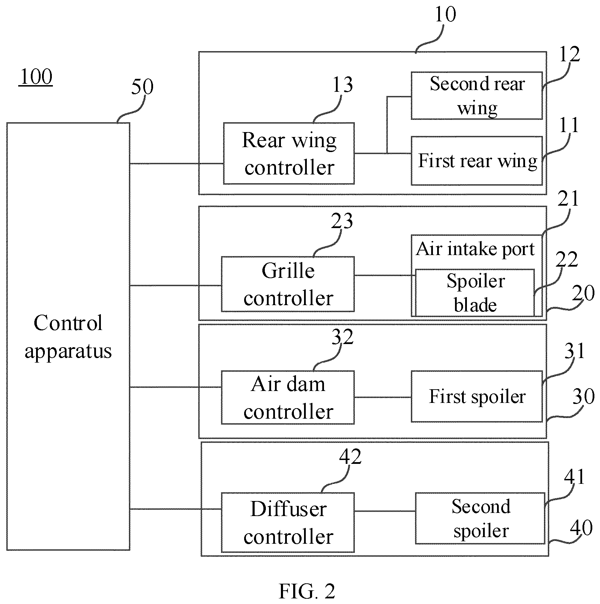

FIG. 2 is a schematic block diagram of an aerodynamic kit control system for a vehicle according to another specific embodiment of the present invention. Specifically, in the present embodiment, the rear wing system 10 is arranged at a rear of the vehicle, the rear wing system 10 may include a rear wing controller 13, a first rear wing 11 and a second rear wing 12, where the rear wing controller 13 receive a signal from the control apparatus 50 to control the first rear wing 11 and the second rear wing 12 to interlink so as to change their positions relative to a mounting surface of the rear of the vehicle, to adjust an airflow at the rear of the vehicle. Compared with a single rear wing, the adoption of double rear wings (i.e.the first rear wing 11 and the second rear wing 12) in this embodiment provides better stability improvement of the vehicle when traveling.

Specifically, the first rear wing 11 and the second rear wing 12 are interlinked in the process of moving, that is, the first rear wing 11 and the second rear wing 12 move together, and in the process of the first rear wing 11 and the second rear wing 12 going from a closed state to an open state, included angles between both the first rear wing 11 and the second rear wing 12 and the mounting plane of the mounting surface of the rear of the vehicle gradually increase, so that the disturbance to the airflow at the rear of the vehicle is stronger, and thus the stability of the vehicle is improved. Conversely, in the process of the first rear wing 11 and the second rear wing 12 going from an open state to an open state, the included angles between both the first rear wing 11 and the second rear wing 12 and the mounting surface of the rear of the vehicle gradually decrease, so that the airflow at the rear of the vehicle is gradually weakened, and thus the capability to improve the stability of the vehicle is weakened.

Furthermore, in the process of gradually increasing or gradually decreasing the included angles between both the first rear wing 11 and the second rear wing 12 and the mounting surface of the rear of the vehicle, an included angle between the first rear wing 11 and the second rear wing 12 is always smaller than a preset included angle. The included angle may be any included angle between 0-3 degrees. Further, when the included angle between the first rear wing 11 and the second rear wing 12 is 0 degree, the first rear wing 11 and the second rear wing 12 are parallel to each other. The parallel first and second rear wings 11, 12 may cause air to flow more smoothly, so that the vehicle has a better aerodynamic effect when travelling and thus may improve the stability of the vehicle when travelling compared with a single rear wing.

As a specific embodiment of the present invention, the grille system 20 of the present embodiment is arranged at a front bumper of the vehicle, and the grille system 20 may include a grille controller 23, an air intake port 21, and at least one spoiler blade 22, and the grille controller 23 receives a signal from the control apparatus 50 to control each spoiler blade 22 to be controllably movable so as to open or close the air intake port 21, to adjust an airflow into the air intake port 21.

Generally, all of the spoiler blades 22 of the grille system 20 are at a same angle when opened, whereas the volume of the airflow is adjusted mainly by controlling the quantity of the spoiler blades 22, which are opened, of the grille system 20. Generally, if the grille system 20 is not required for airflow adjustment, all the spoiler blades 22 are closed, while when a smaller airflow adjustment is required, some of the spoiler blades 22 may be opened, and when a larger airflow adjustment is required, the quantity of the opened spoiler blades 22 may be gradually increased until all the spoiler blades 22 are opened and at this point, the airflow adjustment of the vehicle is strongest. Of course, the shape and quantity of the spoiler blades 22, and the order in which the blades are opened, and the like, may be designed according to specific requirements.

As a specific embodiment of the present invention, the air dam system 30 of the present embodiment is provided at the bottom of the vehicle, and the air dam system 30 includes an air dam controller 32 and a plurality of first spoilers 31, and the plurality of first spoilers 31 are distributed on left side, middle side and right side of the air dam system 30. The air dam controller 32 receives a signal from the control apparatus 50, and then controls the motion of the first spoilers 31 to change their positions relative to the bottom of the vehicle, so as to adjust the airflow at the bottom of the vehicle.

Specifically, when the air dam system 30 is closed, all of the first spoilers 31 are closed, and when the air dam system 30 is opened, the first spoiler 31 is opened to a certain included angle between it and the bottom of the vehicle. When the air dam system 30 is required to less disturb the airflow of the vehicle, only the first spoilers on the left and right sides may be opened. When the air dam system 30 is required to greatly disturb the airflow of the vehicle, the first spoilers on the left, middle and right sides may be opened to improve the stability of control of vehicle.

As a specific embodiment of the present invention, the diffuser system 40 of the present embodiment is arranged at a rear bumper of the vehicle, and the diffuser system 40 includes a diffuser controller 42 and a second spoiler 41, and the diffuser controller 42 receives a signal from the control apparatus 50 to control the second spoiler 41 to move so as to change its position relative to the rear bumper, to adjust the airflow at the rear bumper.

When the diffuser system 40 of the vehicle of the present embodiment is turned off, the second spoiler 41 is completely closed, and when the diffuser system 40 is turned on, the second spoiler 41 is completely opened.

As a specific embodiment of the present invention, the real-time operation data of the present embodiment may include real-time speed data and motion mode data of the vehicle. The control apparatus 50 is configured to, when the vehicle is in at least one of conditions in which the vehicle is in a non-motion mode and a real-time speed of the vehicle is less than a first speed value, control each of the rear wing system 10, the grille system 20, the air dam system 30, and the diffuser system 40 to be in a closed state.

Generally, when the vehicle is in a non-motion mode, the control of the aerodynamic kit may be manually turned on, or the intelligent control of the aerodynamic kit may be manually turned on. If the aerodynamic kit is not manually controlled, or the real-time speed value of the vehicle is small, or the two conditions are met, the aerodynamic kit is in a closed state. At this time, the stability and fuel-saving performance of the vehicle are good, so there is no need for the aerodynamic kit to improve the performance of the vehicle.

As a specific embodiment of the present invention, the real-time operation data of the present embodiment include heat dissipation mode data. The control apparatus 50 is further configured to, when the vehicle is in a motion mode, has a real-time speed of less than the first speed value, and is in a heat dissipation mode, control some or all of the spoiler blades 22 of the grille system 20 to be opened to a position at a first preset angle. The first preset angle may be set as required.

Generally, when the vehicle is in a motion mode, its stability and fuel saving performance will be reduced, and the aerodynamic kit is required to improve the performance of the vehicle. In the present embodiment, when the vehicle is in a motion mode, has a low speed, and is in a heat dissipation mode, since the vehicle has a demand for heat dissipation, some or all of the spoiler blades 22 of the grille system 20 may be opened to a position at the first preset angle, thereby improving the heat dissipation performance of the vehicle, and preventing the too high temperature inside the vehicle due to the poor heat dissipation capacity of the vehicle. Since the speed of the vehicle is still low at this time, other components may be temporarily turned off and do not need to be turned on.

As a specific embodiment of the present invention, the real-time operation data of the present embodiment may include braking mode data. The control apparatus 50 is further configured to, when the vehicle is in a motion mode, has a real-time speed of less than the first speed value, and is in a braking mode, control the rear wing system 10 to move until it is opened to a position where an included angle between a mounting surface of the rear of the vehicle and each of the first rear wing 11 and the second rear wing 12 is a second preset angle.

In the present embodiment, when the vehicle is in the motion mode and the speed of the vehicle is low, the rear wing system 10 may not be started, but if the vehicle is braking at this time, the stability of the vehicle will be reduced. Therefore, the rear wing system 10 of the vehicle may be turned on to provide downward pressure for the rear of the vehicle, thereby improving the stability of the vehicle.

Specifically, the first rear wing 11 and the second rear wing 12 of the present embodiment are interlinked, i.e., jointly moved, when opened, and the first rear wing 11 and the second rear wing 12 are substantially parallel to each other during the opening process. When the vehicle is in a motion mode, has a real-time speed of less than the first speed value, and is in a braking mode, the included angle between the mounting surface of the rear part of the vehicle and each of the first rear wing 11 and the second rear wing 12 is a second preset angle, and the second preset angle is substantially equal to about 25-30 degrees, and preferably the second preset angle may be about 27 degrees.

As a specific embodiment of the present invention, the control apparatus 50 of the present embodiment may be further configured to, when the vehicle is in a motion mode and a real-time speed of the vehicle is greater than or equal to the first speed value and less than a second speed value, control the first rear wing 11 and the second rear wing 12 of the rear wing system 10 to move to a position where an included angle between each of them and the mounting surface of the rear of the vehicle is a third preset angle, where the second speed value is greater than the first speed value, and the third preset angle is smaller than the second preset angle.

Specifically, in the present embodiment, when the vehicle is in a motion mode and is travelling normally, the stability of the vehicle will deteriorate when the speed of the vehicle increases. As mentioned above, when the real-time speed value of the vehicle is less than the first speed value, the rear wing system 10 is turned off. When the real-time speed of the vehicle is greater than the first speed value, the rear wing system 10 will be turned on, and other components will remain turned off. When the real-time speed of the vehicle is greater than the first speed value and less than or equal to the second speed value, each of the first rear wing 11 and the second rear wing 12 of the rear wing system 10 will move to a position where an included angle between each of them and the mounting surface of the rear of the vehicle is a third preset angle, providing downward pressure to the rear of the vehicle, thereby improving the stability of the vehicle. The third preset angle is smaller than the above second preset angle, and a specific third preset angle may be about 10 degrees. When the first rear wing 11 and the second rear wing 12 of the rear wing system 10 are moved to a position where included angles between them and the mounting surface of the rear of the vehicle are about 10 degrees, the vehicle may be provided with sufficient downward pressure, thereby improving the performance of the vehicle.

As a specific embodiment of the present invention, the control apparatus 50 of the present embodiment may be further configured to, when the vehicle is in a motion mode, has a real-time speed of greater than or equal to the first speed value and less than the second speed value, and is in a braking mode, control each of the first rear wing 11 and the second rear wing 12 of the rear wing system 10 to move to a position where an included angle between each of them and the mounting surface of the rear of the vehicle is the second preset angle, and simultaneously control all of the first spoilers 31 of the air dam system 30 to be opened to a position where included angles between them and the bottom of the vehicle are a fourth preset angle.

In the present embodiment, when the vehicle is in the motion mode and the real-time speed of the vehicle is greater than or equal to the first speed value and less than the second speed value, the rear wing system 10 is opened to the third preset angle to meet the performance requirements of the vehicle, and at this time, if the vehicle is in the braking mode, the stability of the vehicle will be further reduced, and both the rear wing system 10 and the air dam system 30 need to be turned on in order to meet the performance requirements of the vehicle. Specifically, in the present embodiment, when the vehicle is in a motion mode, has a real-time speed of greater than or equal to the first speed value and less than the second speed value, and is in a braking mode, the first rear wing 11 and the second rear wing 12 of the rear wing system 10 are moved to the second preset angle from a position where included angles between them and the mounting surface of the rear of the vehicle are a third preset angle. Since the second preset angle is greater than the third preset angle, the capability of the rear wing system 10 to improve vehicle performance is further increased. Meanwhile, the first spoiler 31 in the air dam system 30 of the vehicle is opened to have a fourth preset angle relative to the bottom of the vehicle. The aerodynamic performance of the vehicle is jointly improved by the rear wing system 10 and the air dam system 30.

Specifically, in the present embodiment, the fourth preset angle may be designed according to an actual situation.

As a specific embodiment of the present invention, the control apparatus 50 of the present embodiment may be further configured to, when the vehicle is in a motion mode and a real-time speed of the vehicle is greater than or equal to the second speed value and less than the third speed value, control each of the first rear wing 11 and the second rear wing 12 of the rear wing system 10 to move to a position where an included angle between each of them and the mounting surface of the rear of the vehicle is a fifth preset angle, and simultaneously control the second spoiler of 41 the diffuser system 40 to move to a position where an included angle between it and the rear bumper is a sixth preset angle, where the third speed value is greater than the second speed value, the fifth preset angle is smaller than the second preset angle, and the fifth preset angle is greater than the third preset angle.

Specifically, when the speed of the vehicle is further increased until the real-time speed of the vehicle is greater than the third speed value, the first rear wing 11 and the second rear wing 12 of the rear wing system 10 may be controlled to move from a position where an included angle between them and the mounting surface of the rear of the vehicle is the third preset angle to a position where the included angle therebetween is the fifth preset angle. Since the fifth preset angle is larger than the third preset angle, when the speed of the vehicle gradually increases, the opening angle of the rear wing system 10 also needs to be increased correspondingly to further improve the stability of the vehicle. Of course, at this time, the performance of the vehicle cannot be improved to the optimum only by opening the rear wing system 10, so it is necessary to simultaneously control the second spoiler 41 of the diffuser system 40 to move to a position where the included angle between it and the rear bumper is the sixth preset angle, so as to jointly improve the performance of the vehicle with the rear wing system 10, to improve the aerodynamic performance of the vehicle as much as possible.

Specifically, the fifth preset angle of the present embodiment may be about 20°, which is larger than the third preset angle. The sixth preset angle may be set according to a situation.

As a specific embodiment of that present invention, the control apparatus 50 of the present embodiment is further configured to, when the vehicle is in a motion mode, has a real-time speed of greater than or equal to the second speed value and less than the third speed value, and is in a braking mode, control each of the first rear wing 11 and the second rear wing 12 of the rear wing system 10 to move to a position where an included angle between each of them and the mounting surface of the rear of the vehicle is the second preset angle.

In the present embodiment, when the real-time speed of the vehicle is greater than or equal to the second speed value and less than the third speed value while the vehicle is in the braking mode, since the damage to the stability of the vehicle due to the braking of the vehicle is greater than the damage to the stability of the vehicle due to the increase of the speed of the vehicle, as long as the vehicle is braking, the first rear wing 11 and the second rear wing 12 of the vehicle rear wing system 10 directly move to a position where the included angle between each of them and the mounting surface of the rear of the vehicle is the second preset angle, thereby increasing the downward pressure on the air at the rear of the vehicle as much as possible and improving the stability of the vehicle.

As a specific embodiment of the present invention, the control apparatus 50 of the present embodiment may be further configured to, when the vehicle is in a motion mode and a real-time speed of the vehicle is greater than the third speed value, control some or all of the spoiler blades 22 of the grille system 20 to be opened to a position at the first preset angle, control the first rear wing 11 and the second rear wing 12 of the rear wing system 10 to move to a position where included angles between them and the rear of the vehicle are the fifth preset angle, control the first spoilers 31 of the air dam system 30 located on left and right sides of the air dam system 30 to be opened to a position where included angles between them and the bottom of the vehicle are the fourth preset angle, and simultaneously control the second spoiler of the diffuser system 40 to be opened to a position where an included angle between it and the rear bumper is the sixth preset angle.

In the present embodiment, when the real-time speed of the vehicle is greater than the third speed value, since the speed of the vehicle is too fast, it is necessary to open some or all of the spoiler blades 22 of the grille system 20 of the vehicle to a position at the first preset angle to dissipate heat of the vehicle; control the first rear wing 11 and the second rear wing 12 of the rear wing system 10 to move a position where included angles between them and the rear of the vehicle are the fifth preset angle to press down the air at the rear of the vehicle; control the first spoilers 31 of the air dam system 30 located on left and right sides of the air dam system 30 to be opened to a position where included angles between them and the bottom of the vehicle is the fourth preset angle; and simultaneously control the second spoiler of the diffuser system 40 to be opened to a position where an included angle between it and the rear bumper is the sixth preset angle. All of the four systems improve the performance of the vehicle, thereby optimizing the aerodynamic performance of the vehicle.

As a specific embodiment of the present invention, the control apparatus 50 of the present embodiment is further configured to, when the vehicle is in a welcome mode, control the grille system 20, the air dam system 30, the rear wing system 10, and the diffuser system 40 to be sequentially turned on and turned off.

In the present embodiment, the three-phase turned on and turned off of the grille system 20, the air dam system 30, the rear wing system 10, and the diffuser system 40 means that the grille system 20, the air dam system 30, the rear wing system 10, and the diffuser system 40 may be turned on in sequence, and then the grille system 20, the air dam system 30, the rear wing system 10, and the diffuser system 40 may be turned off in sequence, and so repeated.

As a specific embodiment of the present invention, the present embodiment also provides a vehicle including the aerodynamic kit control system 100 for a vehicle described above.

Finally, the skilled in the art will recognize that although various exemplary embodiments of the present invention have been illustrated and described in detail herein, many other variations or modifications consistent with the principles of the present invention may be directly determined or deduced from the disclosure of the present invention without departing from the spirit and scope of the present invention. Accordingly, the scope of the present invention should be understood and deemed to cover all these variations or modifications.

## Claims

1. An aerodynamic kit control system for a vehicle, comprising:
a rear wing system, arranged at a rear of a vehicle, and comprising a first rear wing and a second rear wing, wherein the first rear wing and the second rear wing are controllably interlinked to change a position relative to the rear of the vehicle, so as to adjust an airflow at the rear of the vehicle;
a grille system, arranged at a front bumper of the vehicle, and comprising an air intake port and at least one spoiler blade, wherein each spoiler blade is controllably movable to open or close the air intake port, so as to adjust an airflow into the air intake port;
an air dam system, arranged at a bottom of the vehicle, and comprising a plurality of first spoilers, wherein the plurality of first spoilers are distributed on left side, middle side, and right side of the air dam system, the first spoiler is controllably movable to change a position relative to the bottom of the vehicle, so as to adjust an airflow at the bottom of the vehicle;
a diffuser system, arranged at a rear bumper of the vehicle, and comprising a second spoiler, wherein the second spoiler is controllably movable to change a position relative to the rear bumper, so as to adjust an airflow at the rear bumper; and
a control apparatus, configured to control the rear wing system, the grille system, the air dam system, and the diffuser system according to real-time operation data of the vehicle, so as to adjust an airflow.

2. The aerodynamic kit control system for a vehicle according to claim 1, wherein,
the real-time operation data comprises real-time speed data and motion mode data of the vehicle; and
the control apparatus is configured to, when the vehicle is in at least one of conditions in which the vehicle is in a non-motion mode and a real-time speed of the vehicle is less than a first speed value, control each of the rear wing system, the grille system, the air dam system, and the diffuser system to be in a closed state.

3. The aerodynamic kit control system for a vehicle according to claim 2, wherein,
the real-time operation data comprises heat dissipation mode data; and
the control apparatus is further configured to, when the vehicle is in a motion mode, has a real-time speed of less than the first speed value, and is in a heat dissipation mode, control part or all of the spoiler blades of the grille system to be opened to a position at a first preset angle.

4. The aerodynamic kit control system for a vehicle according to claim 3, wherein,
the real-time operation data comprises braking mode data;
the control apparatus is further configured to, when the vehicle is in a motion mode, has a real-time speed of less than the first speed value, and is in a braking mode, control the rear wing system to move until it is opened to a position where an included angle between a mounting surface of the rear of the vehicle and each of the first rear wing and the second rear wing is a second preset angle.

5. The aerodynamic kit control system for a vehicle according to claim 4, wherein,
the control apparatus is further configured to, when the vehicle is in a motion mode and has a real-time speed of greater than or equal to the first speed value and less than a second speed value, control each of the first rear wing and the second rear wing of the rear wing system to move to a position where the included angle between each of them and the mounting surface of the rear of the vehicle is a third preset angle, wherein the second speed value is greater than the first speed value, and the third preset angle is smaller than the second preset angle.

6. The aerodynamic kit control system for a vehicle according to claim 5, wherein,
the control apparatus is further configured to, when the vehicle is in a motion mode, has a real-time speed of greater than or equal to the first speed value and less than the second speed value, and is in a braking mode, control each of the first rear wing and the second rear wing of the rear wing system to move to a position where the included angle between each of them and the mounting surface of the rear of the vehicle is the second preset angle, and simultaneously control all of the first spoilers of the air dam system to be opened to a position where included angles between them and the bottom of the vehicle are a fourth preset angle.

7. The aerodynamic kit control system for a vehicle according to claim 6, wherein,
the control apparatus is further configured to, when the vehicle is in a motion mode and has a real-time speed of greater than or equal to the second speed value and less than the third speed value, control each of the first rear wing and the second rear wing of the rear wing system to move to a position where the included angle between each of them and the mounting surface of the rear of the vehicle is a fifth preset angle, and simultaneously control the second spoiler of the diffuser system to move to a position where an included angle between it and the rear bumper is a sixth preset angle;
wherein the third speed value is greater than the second speed value, the fifth preset angle is smaller than the second preset angle, and the fifth preset angle is greater than the third preset angle.

8. The aerodynamic kit control system for a vehicle according to claim 7, wherein,
the control apparatus is further configured to, when the vehicle is in a motion mode, has a real-time speed of greater than or equal to the second speed value and less than the third speed value, and is in a braking mode, control each of the first rear wing and the second rear wing of the rear wing system to move to a position where the included angle between each of them and the mounting surface of the rear of the vehicle is the second preset angle.

9. The aerodynamic kit control system for a vehicle according to claim 8, wherein,
the control apparatus is further configured to, when the vehicle is in a motion mode and has a real-time speed of greater than the third speed value, control part or all of the spoiler blades of the grille system to be opened to a position at the first preset angle, control the first rear wing and the second rear wing of the rear wing system to move to a position where included angles between them and the rear of the vehicle are the fifth preset angle, control the first spoilers of the air dam system located on left and right sides of the air dam system to be opened to a position where included angles between them and the bottom of the vehicle are the fourth preset angle, and simultaneously control the second spoiler of the diffuser system to be opened to a position where the included angle between it and the rear bumper is the sixth preset angle.

10. The aerodynamic kit control system for a vehicle according to claim 9, wherein,
the control apparatus is configured to, when the vehicle is in a welcome mode, control the grille system, the air dam system, the rear wing system, and the diffuser system to be sequentially turned on and turned off.

11. A vehicle, comprising the aerodynamic kit control system for a vehicle according to any one of claims 1-10.
